# EUROPEAN PATENT APPLICATION

(11) **EP 2 942 643 A1**
(43) Date of publication of application: **11.11.2015**
(21) Application number: 15163463.1
(22) Date of filing: 14.04.2015
(51) Int. Cl.: G01S 17/02, H04N 13/02, G01C 11/02, H04N 13/00, G01C 11/36, H04N 5/225

(54) **INFORMATION PROCESSING APPARATUS, MEASURING METHOD AND PROGRAM**

(30) Priority: 09.05.2014 JP 2014097350
(71) Applicant: Ricoh Company, Ltd., Tokyo 143-8555 (JP)
(72) Inventor: Sekiguchi, Hiroyoshi, Tokyo, 143-8555 (JP)
(74) Representative: Schwabe - Sandmair - Marx

(57) **Abstract**

A measuring method of a measuring system includes a capturing unit configured to capture images of a certain area, thereby generating a moving picture, and a lighting unit configured to emit light in a form of pulses. The measuring method comprises the step of; receiving the light by the capturing unit wherein the light is emitted by the lighting unit in synchronization with an exposure period of the capturing unit and is reflected at the certain area, thereby being received by the capturing unit within the exposure period.

## Description

### BACKGROUND OF THE INVENTION

### 1. Field of the Invention

The present technology relates to an information processing apparatus, a measuring method and a program.

### 2. Description of the Related Art

A measuring system is known which measures a distance to a measuring object or determines a state of the measuring object, using a combination of ranging technologies having different measuring theories (for example, stereo camera and laser radar).

For example, in Japanese Patent Gazette No. 3212218, No. 4265931, and No. 5094658, and Japanese Laid-open Patent Publication No. 2013-17449, a technical configuration is disclosed for measuring the distance to the measuring object and detecting size, shape, type, or the like of the measuring object by using measurement results of the laser radar and the stereo camera.

By using such a measuring system, measuring accuracy in the whole system can be improved since the measurement is performed taking advantage of the respective ranging technologies.

However, size of the measuring system becoming bigger, cost of it becoming higher, and the like may be caused in a case where the ranging technologies having different measuring theories are combined in the measuring system, due to an increase of the number of components the measuring system.

### [RELATED ART DOCUMENT]

### [PATENT DOCUMENT]

[Patent Document 1]: Japanese Patent Gazette No. 3212218
[Patent Document 2]: Japanese Patent Gazette No. 4265931
[Patent Document 3]: Japanese Patent Gazette No. 5094658
[Patent Document 4]: Japanese Laid-open Patent Publication No. 2013-17449

### SUMMARY OF THE INVENTION

An object of disclosure of the present technology is to reduce the number of components of the measuring system in a case where the ranging technologies having different measuring theories are combined in the measuring.

The following configuration is adopted to achieve the aforementioned object.

In one aspect of the embodiment, there is provided a measuring method of a measuring system which includes, a capturing unit configured to capture images of a certain area, thereby generating a moving picture, and a lighting unit configured to emit light in a form of pulses, the measuring method comprising the step of: receiving the light by the capturing unit wherein the light is emitted by the lighting unit in synchronization with an exposure period of the capturing unit and is reflected at the certain area, thereby being received by the capturing unit within the exposure period.

Other objects, features and advantages of the present invention will become more apparent from the following detailed description when read in conjunction with the accompanying drawings.

### BRIEF DESCRIPTION OF THE DRAWINGS

Fig. 1 is an illustration diagram of the overall configuration of the measuring system;
Fig. 2A is an illustration diagram of an example arrangement of the capturing units, imaging range of the capturing units, and scanning range of the laser beam emitted from the laser lighting unit, in a case where the measuring system is applied to vehicle installation;
Fig. 2B is another illustration diagram for illustrating an example arrangement of the capturing units, imaging range of the capturing units, and scanning range of the laser beam emitted from the laser lighting unit, in a case where the measuring system is applied to vehicle installation;
Fig. 3 is a block diagram for illustrating the hardware configuration of an information processing apparatus;
Fig. 4 is an illustration diagram for illustrating functions achieved by executing a synchronization control program in the information processing apparatus;
Fig. 5 is an illustration diagram for illustrating an example operation of the capturing unit and an example operation of the laser lighting unit when the synchronization control program is executed;
Fig. 6 is an illustration diagram for showing an example of a first control signal;
Fig. 7 is an illustration diagram for showing an example of a second control signal;
Fig. 8 is an illustration diagram for showing an example of a third control signal;
Fig. 9 is an illustration diagram for illustrating functions achieved by executing the image processing program in the information processing apparatus;
Fig. 10 is an illustration diagram for illustrating in detail functions of the analyzing unit;
Fig. 11 is an illustration diagram for illustrating a first method for calculating a luminance value corresponding to the light receiving amount;
Fig. 12 is an illustration diagram for illustrating a second method for calculating the luminance value corresponding to the light receiving amount;
Fig. 13 is an illustration diagram for illustrating a third method for calculating the luminance value corresponding to the light receiving amount;
Fig. 14 is an illustration diagram for illustrating a method for generating the analysis information performed by an analysis information generating unit;
Fig. 15 is an illustration diagram for illustrating the overall configuration of the measuring system of a second embodiment;
Fig. 16 is an illustration diagram for illustrating a method for generating the analysis information in the analysis information generating unit;
Fig. 17A is an illustration diagram for showing an example of the captured images of the third embodiment;
Fig. 17B is an illustration diagram for showing another example of the captured images of a third embodiment;
Fig. 18 is an illustration diagram for illustrating an overall configuration of the measuring system of a fourth embodiment; and
Fig. 19 is an illustration diagram for illustrating functions achieved by executing the image processing program in the information processing apparatus.

### DETAILED DESCRIPTION OF THE PREFERRED EMBODIMENTS

Herein below, embodiments will be described with reference to accompanying drawings. Additionally, in the present specification and drawings, an identical reference numeral will be applied to elements or the like that have substantially similar functions and configurations, and descriptions thereof will be omitted.

### [First Embodiment]

### <1. Overall configuration of measuring system>

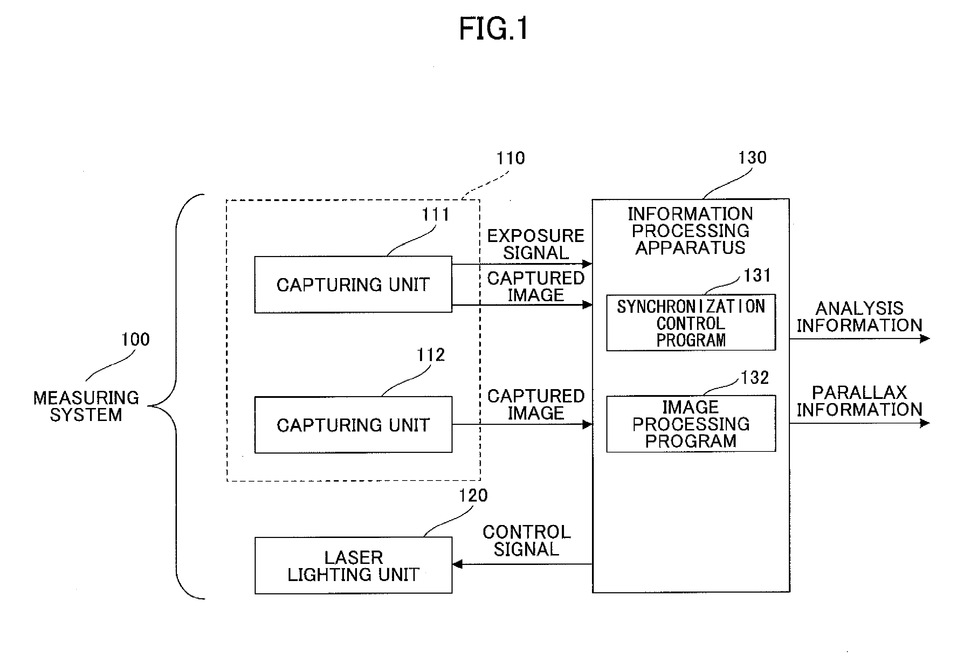

First, an overall configuration of a measuring system of a first embodiment will be described. Fig. 1 is an illustration diagram for illustrating the overall configuration of the measuring system 100. As shown in Fig. 1, the measuring system 100 includes a stereo capturing unit 110, a laser lighting unit 120 and an information processing apparatus 130.

The stereo capturing unit 110 includes a monocular capturing unit 111 and a monocular capturing unit 112. The capturing units 111 and 112 respectively capture images in every frame transmitted in a constant frame cycle and send the captured images (moving picture) to the information processing apparatus 130. Additionally, exposure period of the capturing unit 111 is in synchronization with that of the capturing unit 112. An exposure signal indicating the exposure period of the capturing unit 111 is sent to the information processing apparatus 130.

The laser lighting unit 120 emits a laser beam in the form of pulses, thereby irradiating an object to be irradiated. Laser beam emission timing is controlled by the information processing apparatus 130. The laser lighting unit 120 emits the laser beam based on a control signal received from the information processing apparatus 130. Additionally, the laser beam emitted from the laser lighting unit 120 is reflected at the object to be irradiated and received by one or both of the capturing unit 111 and the capturing unit 112, thereby being sent to the information processing apparatus 130 as the captured image.

The number of components of the measuring system can be reduced by receiving the laser beam emitted from the laser lighting unit 120 and reflected at the object to be irradiated not by a dedicated photodetector but by the photodetectors of the capturing unit 111 and the capturing unit 112. Therefore, a physical size or a cost of the measuring system 100 can be reduced.

The information processing apparatus 130 includes a synchronization control program 131 and an image processing program 132. The synchronization control program 131 controls the capturing unit 111 and the capturing unit 112 so that the exposure period of the capturing unit 111 becomes in synchronization with the exposure period of the capturing unit 112. Also, the synchronization control program 131 generates the control signal so that the laser beam is emitted in synchronization with the exposure period of the capturing unit 111 and the capturing unit 112, thereby controlling the laser lighting unit 120.

The image processing program 132 calculates a parallax value for detecting a distance to the measuring object on every pixel by calculating parallax of the captured images sent from the stereo capturing unit 110, thereby generating parallax information. Additionally, in the present embodiment, the captured image sent from the capturing unit 111 is used as a reference image while the captured image sent from the capturing unit 112 is used as a comparison image, when generating the parallax information.

Further, the image processing program 132 analyzes the object to be irradiated based on luminance values of the pixels included in the captured image sent from the capturing unit 111, corresponding to positions at which the laser beam is received, and outputs the analysis result as analysis information. Additionally, the analysis result includes information for indicating presence of change in the object to be irradiated, the distance to the object to be irradiated, whether the object to be irradiated is approaching or separating, and the like.

### <2. Arrangement of Capturing Unit and Laser Lighting Unit>

In the following, in a case where the measuring system 100 is applied to vehicle installation, an example arrangement will be described of the capturing units 111 and 112, the laser lighting unit 120 and the information processing apparatus 130; imaging range of the capturing units 111 and 112, and scanning range of the laser beam emitted from the laser lighting unit 120.

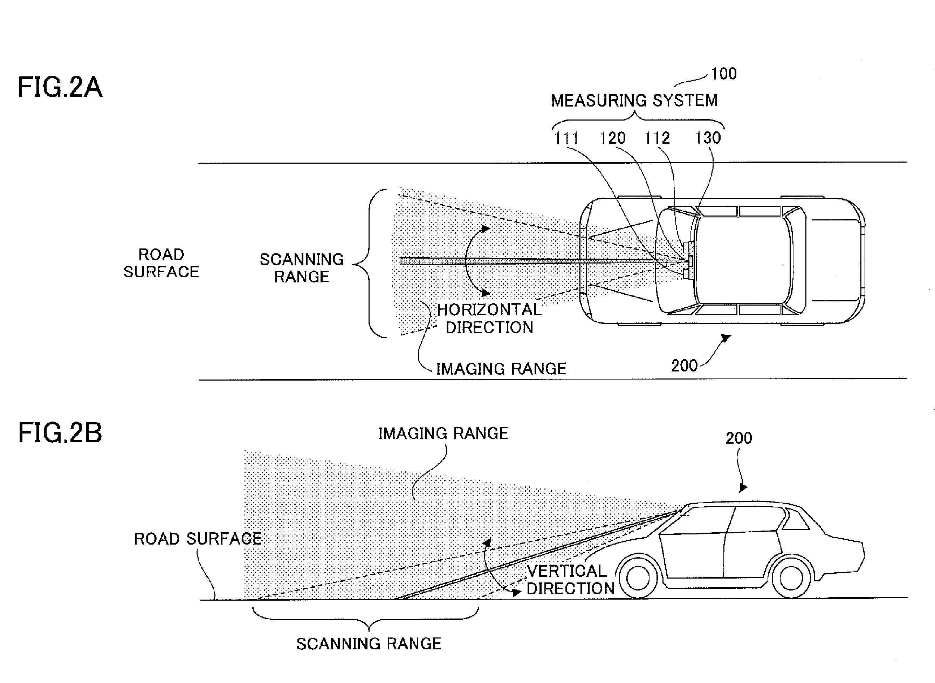

Fig. 2A and 2B are illustration diagrams for illustrating an example arrangement of the capturing units 111 and 112, an example of imaging range of the capturing units 111 and 112, and an example of scanning range of the laser beam emitted from the laser lighting unit 120, in a case where the measuring system 100 is applied to vehicle installation.

As shown in Fig. 2A and 2B, the capturing units 111 and 112, and the laser lighting unit 120 are disposed in the vicinity of a windshield (for example, back side of a rear view mirror) in a ceiling inside a vehicle 200, which corresponds to a center in a vehicle width direction.

As disposed in such position, the capturing units 111 and 112 capture the image in front of the vehicle 200 in the traveling direction. Also, the laser lighting unit 120 radiates the laser beam toward the traveling direction.

In Fig. 2A and 2B, the areas printed with hatching pattern show the imaging range of the capturing units 111 and 112. Also the dotted lines show the scanning range of the laser beam emitted from the laser lighting unit 120.

As shown in Fig. 2A, emitting direction of the laser beam can be horizontally changed by changing a revolving angle of the laser lighting unit 120. That is, the laser lighting unit 120 can horizontally scan with the laser beam the object to be irradiated (the road surface in Fig. 2A).

Also, as shown in Fig. 2B, the emitting direction of the laser beam can be vertically changed by changing an elevation angle of the laser lighting unit 120. That is, the laser lighting unit 120 can also vertically scan with the laser beam the object to be irradiated (the road surface in Fig. 2B).

Additionally, the scanning range in horizontal direction and vertical direction approximately coincide with the imaging range of the capturing units 111 and 112. However, in the present embodiment, the emitting direction of the laser beam, emitted from the laser lighting unit 120, is fixed horizontally and vertically (does not scan). (Hereinafter, description will be given in a case where the emitting direction of the laser beam is one fixed direction.)

### <3. Hardware Configuration of Information Processing Apparatus>

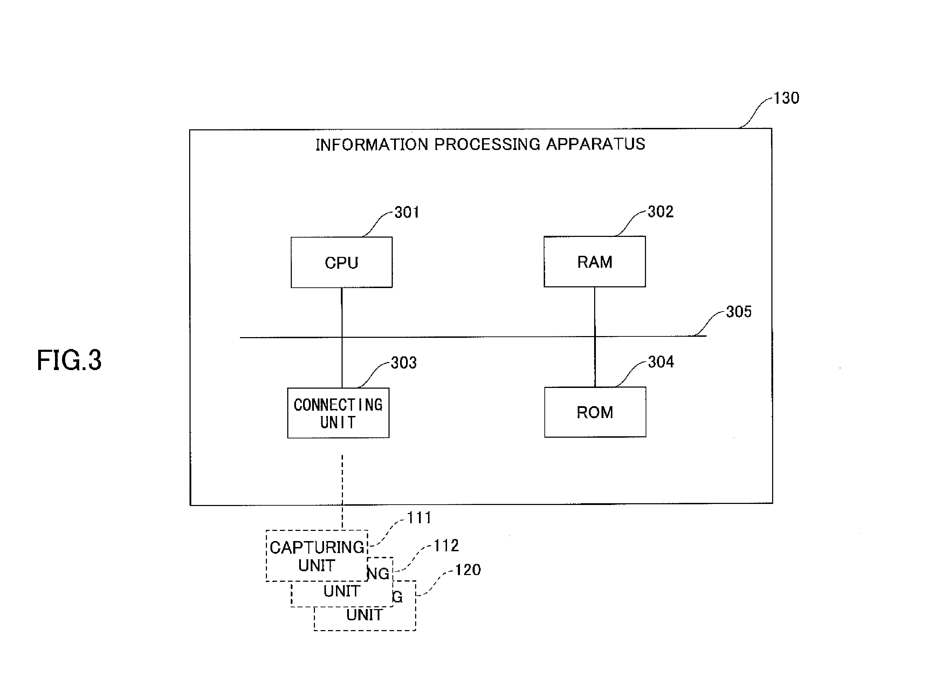

In the following, the hardware configuration of the information processing apparatus 130 will be described. Fig. 3 is a block diagram for illustrating the hardware configuration of the information processing apparatus 130.

For example, the information processing apparatus 130 can be formed of a substrate configured as SOC (System on a Chip) including an FPGA (Field Programmable Gate Array). Specifically, as shown in Fig. 3, the information processing apparatus 130 includes a CPU (Central Processing Unit) 301, a RAM (Random Access Memory) 302, a connecting unit 303 and a ROM (Random Access Memory) 304. Additionally, the units of the information processing apparatus 130 are connected with each other through a bus 305.

The CPU 301 is a computer for executing programs stored in the ROM 304 (synchronization the control program 131, the image processing program 132, and the like).

The RAM 302 is a main storage device, such as a DRAM (Dynamic Random Access Memory) or a SRAM (Static Random Access Memory). The RAM 302 serves as a working memory in which the programs stored in the ROM 304 are loaded when being executed by the CPU 301.

The connecting unit 303 is an interface for connecting and communicating with the stereo capturing unit 110 (capturing units 111 and 112) or the laser lighting unit 120.

The ROM 304 is a memory, such as EPROM or EEPROM, and stores the synchronization control program 131, the image processing program 132, etc., which are executed by the CPU 301.

### <4. Function of information processing apparatus (synchronization control program)>

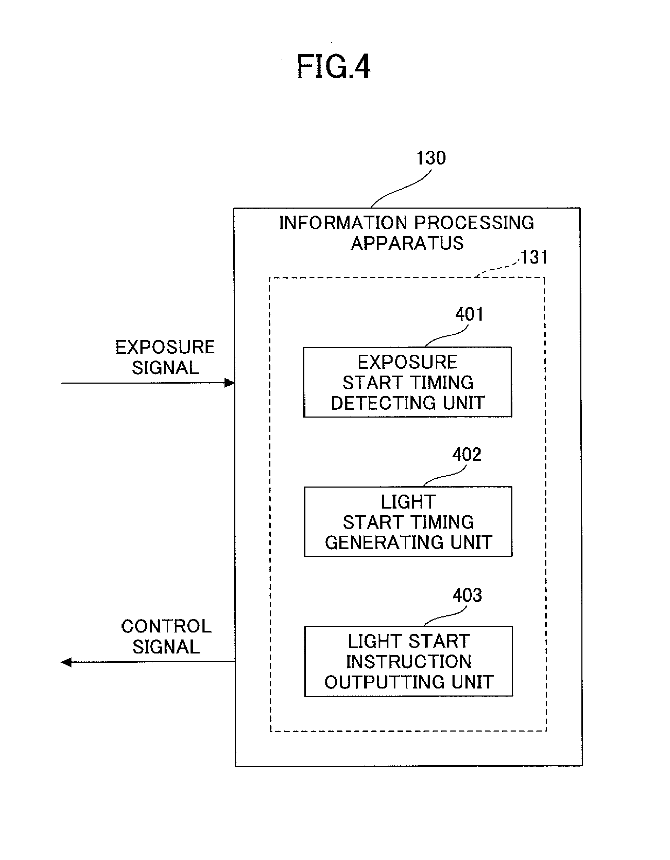

In the following, functions achieved by executing the synchronization control program 131 in the information processing apparatus 130 will be described. Fig. 4 is an illustration diagram for illustrating the functions achieved by executing the synchronization control program 131 in the information processing apparatus 130.

As shown in Fig. 4, the information processing apparatus 130 serves as a exposure start timing detecting unit 401, a light start timing generating unit 402, and a light start instruction outputting unit 403 when the synchronization control program 131 is executed.

The exposure start timing detecting unit 401, receiving the exposure signal sent from the capturing unit 111, detects a start timing of the exposure period.

The light start timing generating unit 402 generates the control signal for instructing timing of laser beam emission by the laser lighting unit 120 based on the exposure start timing detected by the exposure start timing detecting unit 401.

The light start instruction outputting unit 403 outputs the control signal generated by the light start timing generating unit 402 to the laser lighting unit 120.

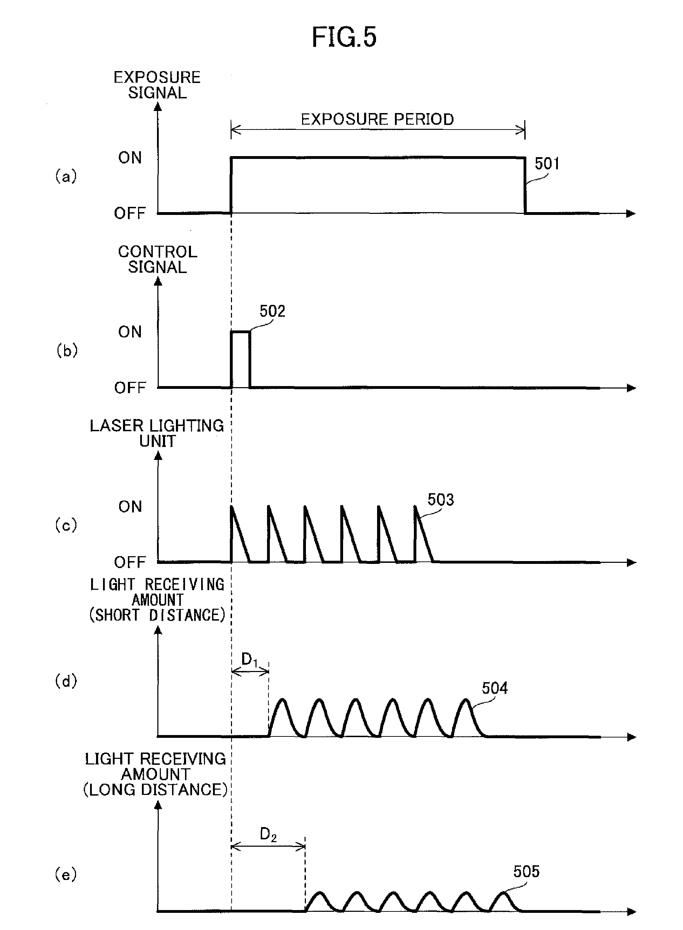

Fig. 5 is an illustration diagram for illustrating an example operation of the capturing unit 111 and an example operation of the laser lighting unit 120 when the synchronization control program 131 is executed. Fig. 5 - (a) is an example of the exposure signal sent from the capturing unit 111. The capturing unit 111 outputs an exposure signal 501 during a term in which the synchronization control program 131 is executed. The exposure start timing detecting unit 401 receives the exposure signal 501 to detect the rising edge of the exposure signal 501, thereby detecting the exposure start timing of the capturing unit 111.

Fig. 5 -(b) is an example of the control signal generated by the light start timing generating unit 402 based on the exposure start timing detected by the exposure start timing detecting unit 401. In Fig. 5 - (b), a control signal 502 is generated so that the laser beam is emitted from the laser lighting unit 120 at the same time at which the exposure is started. Additionally, the control signal 502 generated by the light start timing generating unit 402 is not required to be generated at the same time when the exposure is started. The control signal may be generated at a certain timing so that the laser beam emitted from the laser lighting unit 120 and reflected at the object to be irradiated can be received in the same exposure period in which the laser lighting unit 120 has emitted the laser beam. The light start timing generating unit 402 is configured to generate the control signal so that number of the pulses in the laser beam emitted by the laser lighting unit 120 is equal to number of the pulses in the received laser beam.

When the control signal 502 in Fig. 5 - (b) is output from the light start instruction outputting unit 403 to the laser lighting unit 120, the laser lighting unit 120 emits the laser beam in the form of pulses at timing when the control signal 502 is received.

Fig. 5 - (c) is an example of the laser beam in form of pulses emitted from the laser lighting unit 120. As shown as Fig. 5 -(c), the laser lighting unit 120 outputs a laser beam 503 in form of pulses when receiving the control signal 502. The laser beam 503 is emitted in the form of pulses as described above, so as to secure a light receiving amount of the laser beam enough to be distinguished from external environmental light other than the laser beam 503 when the laser beam is received by the photo detection elements in the capturing unit 111.

Fig. 5 - (d) is an example of a light receiving amount 504 of the photo detection elements in the capturing unit 111 in a case where the distance to the object to be irradiated is short. The laser beam emitted from the laser lighting unit 120 in form of pulses is reflected at the object to be irradiated, thereby being received by the photo detection elements in the capturing unit 111. The period D₁, which is a period from emitting the first pulse of the laser beam by the laser lighting unit 120 to receiving the first pulse of the reflected laser beam by the photo detection elements in the capturing unit 111, is proportional to the distance from the laser lighting unit 120 to the object to be irradiated.

For example, in a case where the laser beam emitted from the laser lighting unit 120 is reflected at the object to be irradiated placed 10 m ahead, D₁ becomes 67 ns (= (10m·2)/(3·10⁸m/s)).

Fig. 5 - (e) is another example of light receiving amount of the photo detection elements in the capturing unit 111. A light receiving amount 505, in a case where the distance to the object to be irradiated is long, is shown. For example, in a case where the laser beam emitted from the laser lighting unit 120 is reflected at the object to be irradiated placed 40 m ahead, D₂ becomes 267 ns (= (40m·2)/(3·10⁸m/s)). Additionally, in a case where the distance to the object to be irradiated is long, the light receiving amount of the photo detection elements in the capturing unit 111 is smaller in comparison with that in a case where the distance to the object to be irradiated is short.

The photo detection elements in the capturing unit 111 output total light receiving amount of the pulses of the laser beam received in the exposure period as an electric signal. That is, the distance to the object to be irradiated correlates with luminance values calculated based on the electric signal output from the photo detection elements.

### <5. Detail of Function of Light Start Timing Generating Unit>

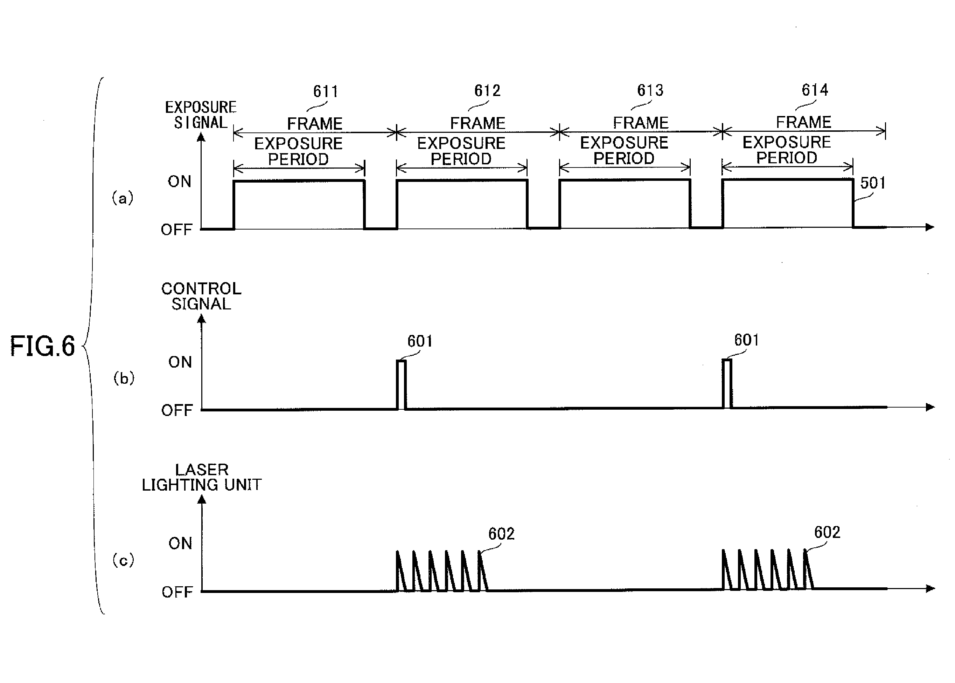

In the following, a detailed description of functions of the light start timing generating unit 402 will be given. Fig. 6 to Fig. 8 are diagrams for illustrating control signals generated by the light start timing generating unit 402. The light start timing generating unit 402 of the present embodiment can generate at least the control signals shown in Fig. 6 to Fig. 8. In the following, the function of the light start timing generating unit 402 will be described with reference to Fig. 6 to Fig. 8.

### (1) First Control Signal (Fig. 6)

Fig. 6 is an illustration diagram for showing an example of a first control signal. Fig.6 - (a) is an example of the exposure signal 501 sent from the capturing unit 111. As shown as Fig. 6 - (a), the exposure periods appear at fixed intervals since the capturing unit 111 captures the image in every frame transmitted in a constant cycle. Also, the exposure periods are fixed.

Fig. 6 -(b) is an example of a first control signal 601 generated by the light start timing generating unit 402. The light start timing generating unit 402 generates the control signal 601 in response to the detection of the exposure start timing by the exposure start timing detecting unit 401 in every two frames while the light start timing generating unit 402 does not generate the control signal 601 in response to the detection of the exposure start timing in the other frames. Thus, an exposure period in which the control signal 601 is generated and an exposure period in which the control signal 601 is not generated alternately appear.

Fig. 6 - (c) is an example of a laser beam 602 in a form of pulses emitted from the laser lighting unit 120. As shown as Fig. 6 - (c), since the laser lighting unit 120 emits the laser beam 602 in the form of pulses in response to receiving the control signal 601, an exposure period in which the laser beam 602 in the form of pulses is emitted and an exposure period in which the laser beam 602 in the form of pulses is not emitted alternately appear.

As a consequence, the laser beam 602 does not appear with respect to the image captured in the frame 611 and the image captured in the frame 613. Meanwhile, the laser beam 602 appears with respect to the image captured in the frame 612 and the image captured in the frame 614.

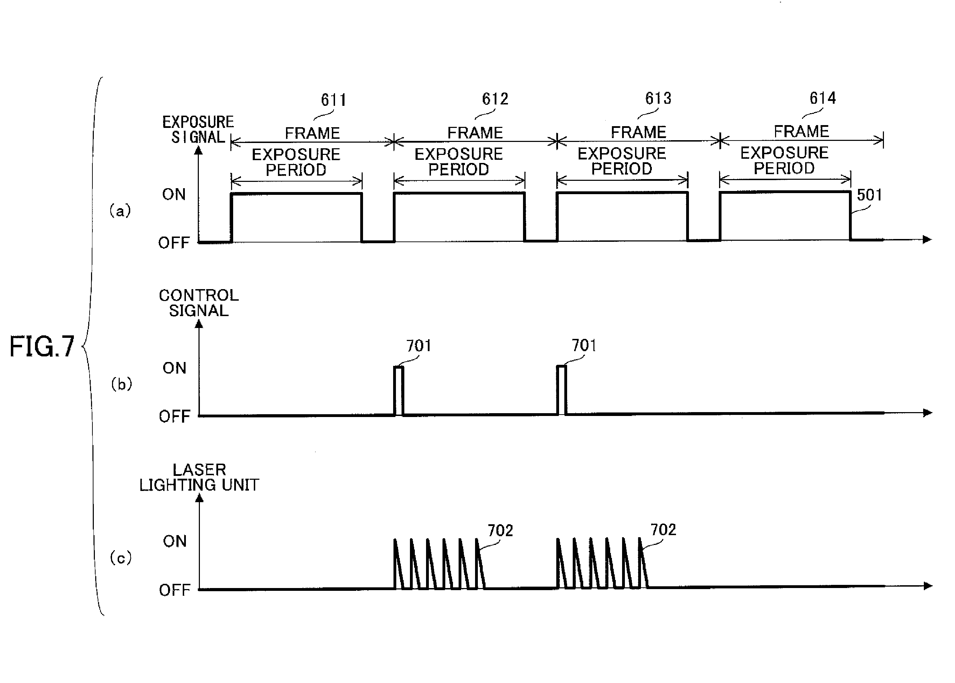

### (2) Second Control Signal (Fig. 7)

Fig. 7 - (a) is an example of the exposure signal 501 sent from the capturing unit 111, which is similar to Fig. 6 - (a).

Fig. 7 - (b) is an example of a second control signal 701 generated by the light start timing generating unit 402. The light start timing generating unit 402 generates the control signal 701 in response to detecting the exposure start timing by the exposure start timing detecting unit 401 two times, then the light start timing generating unit 402 does not generate the control signal 701 in response to the detecting the exposure start timing one time; and the above mentioned process will be repeated. Thus, two successive exposure periods in which the control signal 701 is generated appear, and subsequently, one exposure period in which the control signal 701 is not generated appears.

Fig. 7 - (c) is an example of a laser beam 702 in a form of pulses emitted from the laser lighting unit 120. As shown as Fig. 7 - (c), two successive exposure periods in which the laser beam 702 is emitted appear, and subsequently, one exposure period in which the laser beam 702 is not emitted appears.

As a consequence, the laser beam 702 does not appear with respect to the image captured in the frame 611 and the image captured in the frame 614. Meanwhile, the laser beam 702 appears with respect to the image captured in the frame 612 and the image captured in the frame 613.

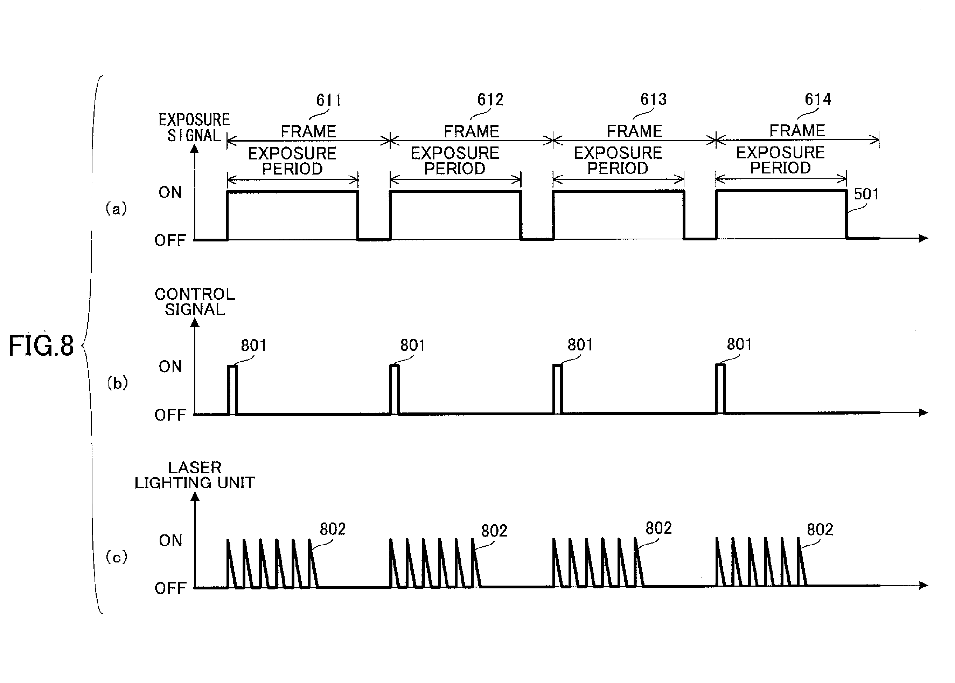

### (3) Third Control Signal (Fig. 8)

In the following a third control signal 801 will be described with reference to Fig. 8. Fig. 8 is an illustration diagram for showing an example of the third control signal 801. Fig. 8 - (a) is an example of the exposure signal 501 which is similar to Fig. 6 - (a).

Fig. 8 - (b) is an example of the third control signal 801 generated by the light start timing generating unit 402. The light start timing generating unit 402 generates the control signal 801 every time in response to detecting the exposure start timing by the exposure start timing detecting unit 401. Thus, the control signal 801 is generated in every exposure period.

Fig. 8 - (c) is an example of a laser beam 802 in a form of pulses emitted from the laser lighting unit 120. As shown as Fig. 8 - (c), the laser lighting unit 120 emits the laser beam 802 in every exposure period.

As a consequence, the laser beams 802 appear in the frames 611 - 614.

### <6. Function of Information Processing Apparatus (Image Processing Program)>

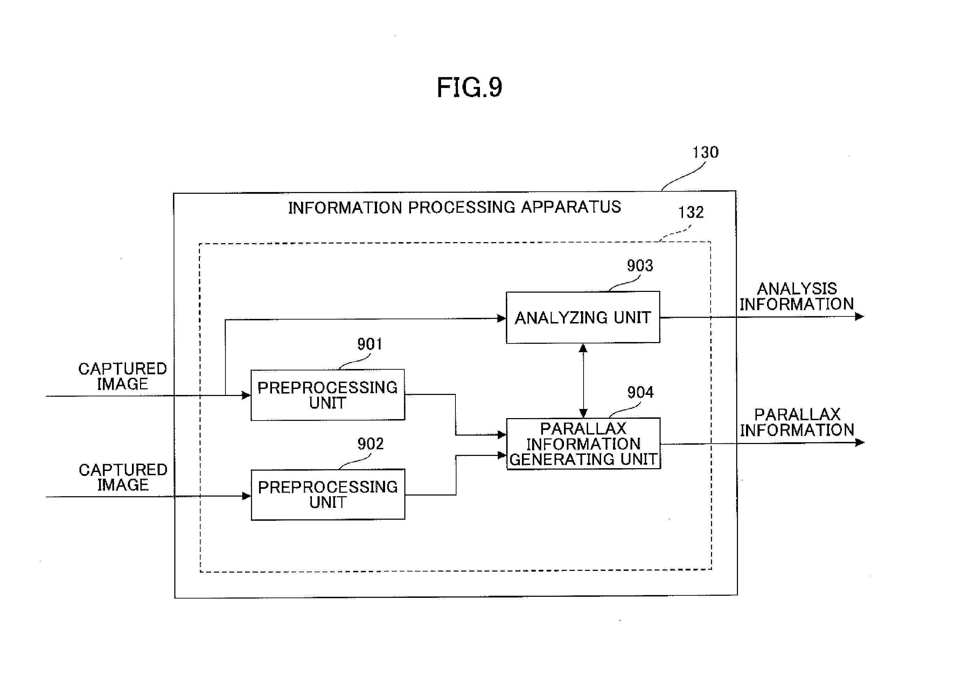

In the following, functions achieved by executing the image processing program 132 in the information processing apparatus 130 will be described. Fig. 9 is an illustration diagram for illustrating the functions achieved by executing the image processing program 132 in the information processing apparatus 130.

As shown in Fig. 9, the information processing apparatus 130 serves as a preprocessing unit 901, a preprocessing unit 902, an analyzing unit 903, and a parallax information generating unit 904 when the image processing program 132 is executed.

The preprocessing units 901 and 902 perform the process of gamma correction or distortion correction on the captured image (reference image) sent from the capturing unit 111 and the captured image (comparison image) sent from the capturing unit 112.

The analyzing unit 903, receiving the captured image (reference image) sent from the capturing unit 111, extracts the luminance values of the pixels included in the captured image (reference image), corresponding to positions at which the laser beam is received. Further, the analyzing unit 903 analyzes the extracted luminance values to output the analysis result as the analysis information.

The parallax information generating unit 904 calculates the parallax values with respect to the respective pixels included in the reference image and the comparison image, thereby generating the parallax information, where the preprocesses by the preprocessing units 901 and 902 are respectively performed on the reference image and the comparison image.

Additionally, the EBM (Edge Base Method) is exemplified as a calculation method for generating the parallax information. Specifically, the method is exemplified in which the parallax values are calculated in a portion where the texture component (edge component) is intensified.

Also, the SGM (Semi-Global Matching) is exemplified. Specifically, in the Sub-Pixel Estimation method (fitting by equal angle straight lines, a parabola, a higher-order polynomial, or the like) a matching index value is propagated by using a recurrence formula based on a target pixel and pixels in the vicinity of the target pixel, thereby calculating an integer parallax which gives the minimum index value and an under decimal point parallax by using the index value of adjacent parallax. Since the parallax of the respective pixels in an entire captured image can be calculated through such a method, the SGM enables reducing pixels missing in the parallax calculation compared with the EBM.

### <7. Functions of Analyzing Unit>

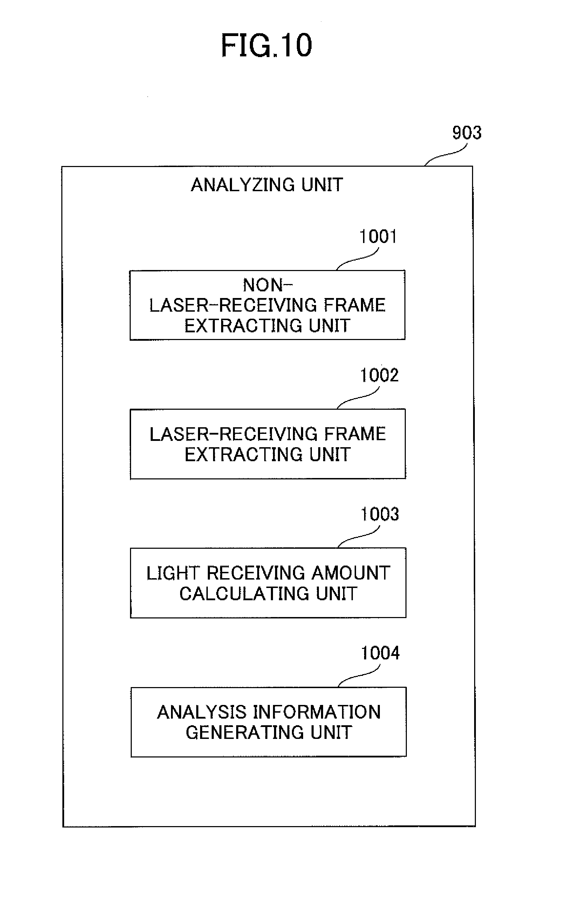

In the following, functions of the analyzing unit 903, among the functions achieved by executing the image processing program 132, will be described. Fig. 10 is an illustration diagram for illustrating the detailed functions of the analyzing unit 903.

As shown in Fig. 10, the analyzing unit 903 includes a non-laser-receiving frame extracting unit 1001, a laser-receiving frame extracting unit 1002, a light receiving amount calculating unit 1003, and an analysis information generating unit 1004.

The non-laser-receiving frame extracting unit 1001 extracts the captured image of a frame in which the laser beam has not been emitted within the exposure period among the captured images of the respective frames transmitted in constant frame cycles.

The laser-receiving frame extracting unit 1002 extracts the captured image of a frame in which the laser beam has been emitted within the exposure period among the captured images of the respective frames transmitted in constant frame cycles. Additionally, every image is extracted in a case where the laser beam is emitted in every exposure period (See Fig. 8).

The light receiving amount calculating unit 1003 calculates differential values between the luminance values of the respective pixels in the captured image extracted by the non-laser-receiving frame extracting unit 1001 and the luminance values of the respective pixels in the captured image extracted by the laser-receiving frame extracting unit 1002. Thus, the luminance values corresponding to the light receiving amount of the laser beam received by the photo detection elements in the capturing unit 111 are calculated.

The analysis information generating unit 1004 analyzes the luminance values corresponding to the light receiving amount of the laser beam calculated by the light receiving amount calculating unit 1003, thereby outputting information indicating presence of change in the object to be irradiated, the distance to the object to be irradiated, whether the object to be irradiated is approaching or separating, and the like.

### <8. Details of Functions of Light Receiving Amount Calculating Unit>

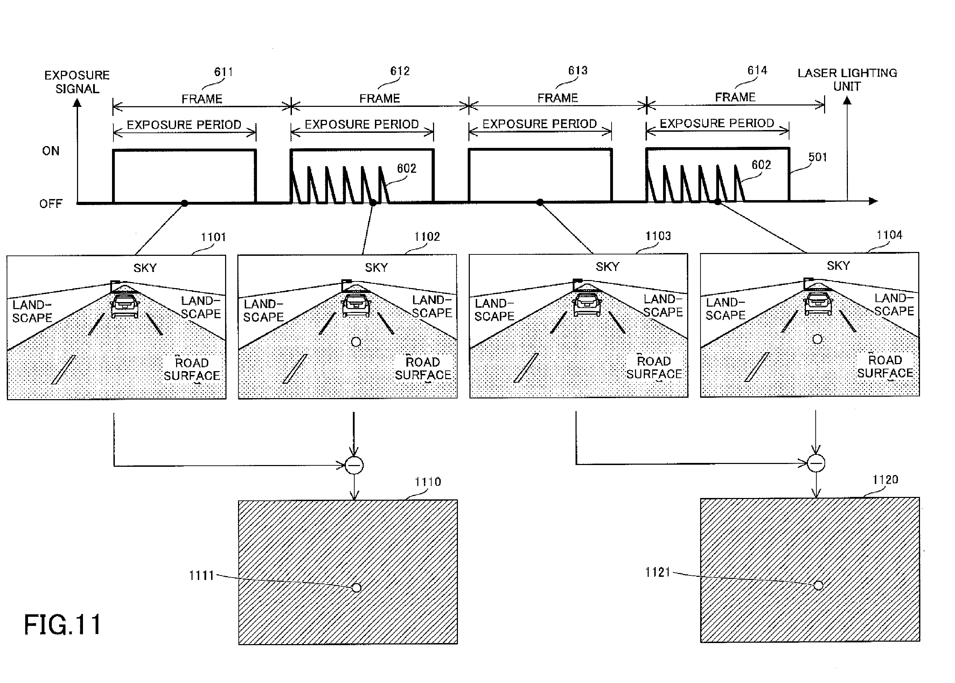

In the following, details of the functions of the light receiving amount calculating unit 1003 will be described. Fig. 11 - Fig. 13 illustrate a method for calculating the luminance values corresponding to the light receiving amount of the laser beam performed by the light receiving amount calculating unit 1003. Herein below, the method is described for calculating the luminance values corresponding to the light receiving amounts of the laser beam in a case where the laser beam is emitted based on the control signals shown in Fig. 6 - Fig. 8.

### (1) The method for calculating the luminance value in a case where the laser beam is emitted based on the control signal shown in Fig. 6 (Fig. 11)

Fig. 11 is an illustration diagram for illustrating the method for calculating the luminance value in a case where the laser beam is emitted based on the control signal shown in Fig. 6. The captured images 1101 - 1104 are respectively generated in the frame 611 - frame 614.

Content of the captured image 1101 is almost the same as content of the captured image 1102 since the captured image 1101 extracted by the non-laser-receiving frame extracting unit 1001 and the captured image 1102 extracted by the laser-receiving frame extracting unit 1002 are temporally continuous images. Meanwhile, the content of the captured image 1101 is generated based on the external environmental light without components of the laser beam since the laser beam has not been emitted within the exposure period in the frame 611 in which the captured image 1101 has been generated. On the contrary, the content of the captured image 1102 is generated based on the external environmental light and the laser beam since the laser beam 602 has been emitted within the exposure period in the frame 612 in which the captured image 1102 has been generated.

Therefore, the light receiving amount calculating unit 1003 can generate a differential image 1110 by calculating the differential values between the luminance values of the respective pixels in the captured image 1102 and the luminance values of the respective pixels in the captured image 1101.

As described above, since the content of the captured image 1101 is almost the same as the content of the captured image 1102, approximately, the differential values in the differential image 1110 become "0" except that of a pixel 1111 which corresponds to a position at which the laser beam is received. Meanwhile, the differential value of the pixel 1111, which corresponds to the position at which the laser beam is received, becomes a luminance value corresponding to the light receiving amount of the laser beam.

Similarly, the differential values between the luminance values of the respective pixels in the captured image 1103 and those in the captured image 1104 are calculated. Thus, the light receiving amount calculating unit 1003 generates the differential image 1120, thereby calculating the luminance value corresponding to the light receiving amount of the laser beam.

As described above, the luminance value corresponding to the light receiving amount of the laser beam can be calculated by calculating the differential values between the respective luminance values of the respective pixels in temporally continuous images in a case where the laser beam is emitted based on the control signal shown in Fig. 6.

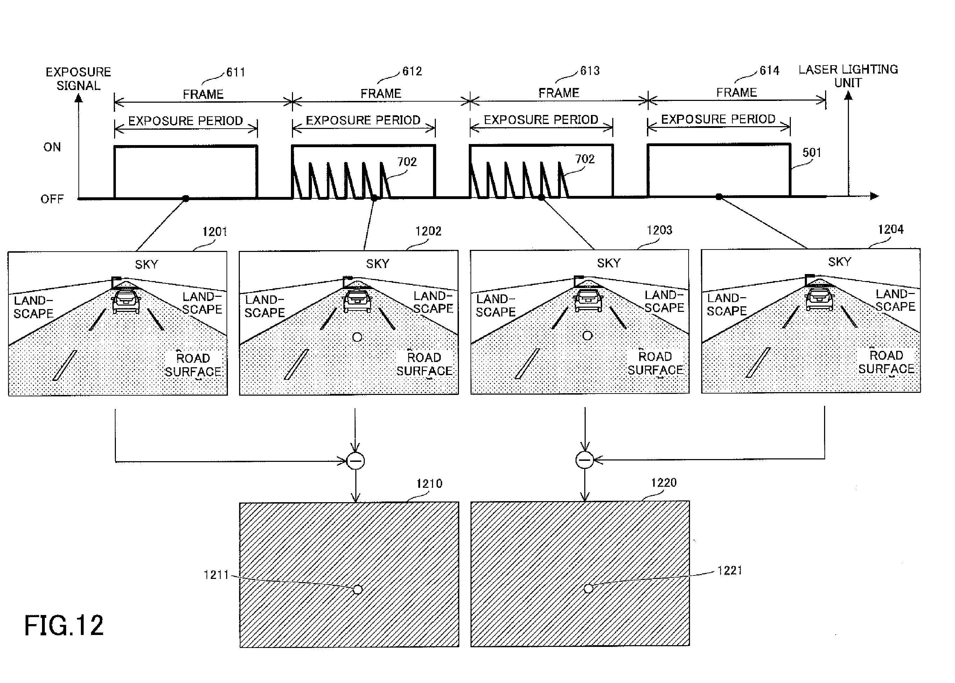

### (2) The method for calculating the luminance value in a case where the laser beam is emitted based on the control signal shown in Fig. 7 (Fig. 12)

Fig. 12 is an illustration diagram for illustrating the method for calculating the luminance value in a case where the laser beam is emitted based on the control signal shown in Fig. 7. A frame in which the laser beam is not emitted within the exposure period must be transmitted just before or just after a frame in which the laser beam is emitted within the exposure period in a case where the laser beam is emitted based on the control signal shown in Fig. 7.

For example, the frame 611 in which the laser beam is not emitted within the exposure period is transmitted just before the frame 612 in which the laser beam is emitted within the exposure period. Also, the frame 614 in which the laser beam is not emitted within the exposure period is transmitted just after the frame 613 in which the laser beam is emitted within the exposure period.

Therefore, the differential values of pixels 1211 and 1221 which correspond to positions at which the laser beam is received can be calculated by generating differential images 1210 and 1220 using the captured images (captured images 1201 and 1204) generated in these frames (frame 611 and frame 614). That is, the luminance value corresponding to the light receiving amount of the laser beam can be calculated.

Additionally, in a case where the laser beam is emitted based on the control signal shown in Fig. 7, the captured image generated in a given frame in which the laser beam is not emitted within the exposure period is used for calculating the differential values between the luminance values of the captured image generated in a frame transmitted just before or just after the given frame.

In other words, in a case where the laser beam is emitted based on the control signal shown in Fig. 7, frequency of calculating the luminance value corresponding to the light receiving amount of the laser beam can be raised in comparison with the case where the laser beam is emitted based on the control signal shown in Fig. 6.

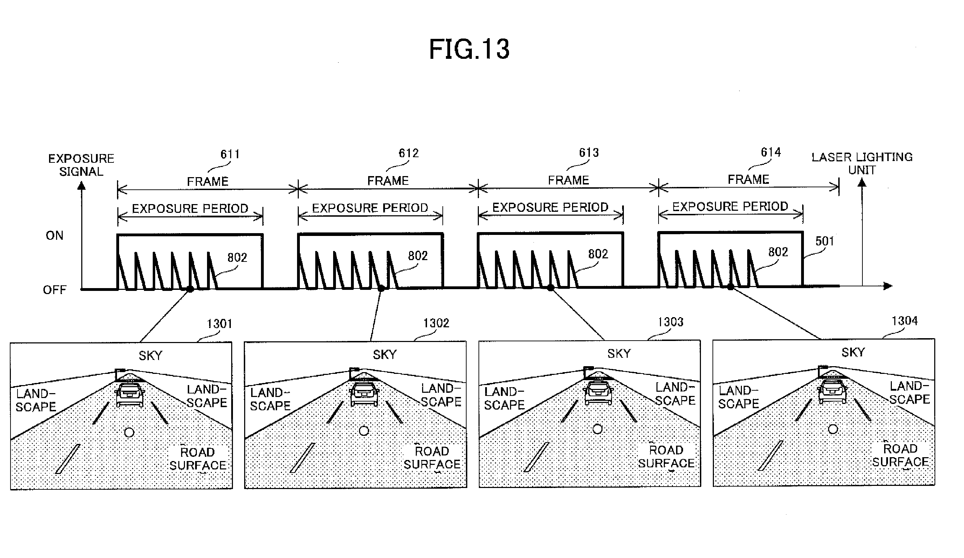

### (3) The method for calculating the luminance value in a case where the laser beam is emitted based on the control signal shown in Fig. 8 (Fig. 13)

Fig. 13 is an illustration diagram for illustrating the method for calculating the luminance value in a case where the laser beam is emitted based on the control signal shown in Fig. 8. Since the laser beam is emitted in every exposure period, no frame in which the laser beam has not been emitted is transmitted in a case where the laser beam is emitted based on the control signal shown in Fig. 8.

Therefore, light receiving amount calculating unit 1003 detects the pixels which correspond to positions at which the laser beam is received, respectively, in the captured images 1301 - 1304, thereby extracting the luminance values of the detected pixels. Additionally, the pixels which correspond to positions at which the laser beam is received can be detected by, for example, respectively performing an edge extraction process on the captured images 1301 - 1304.

Additionally, while the luminance values extracted as described above include the external environmental light as well as the laser beam, the analysis information can be output corresponding to every captured image.

### <9. Detail of Function of Analysis Information Generating Unit>

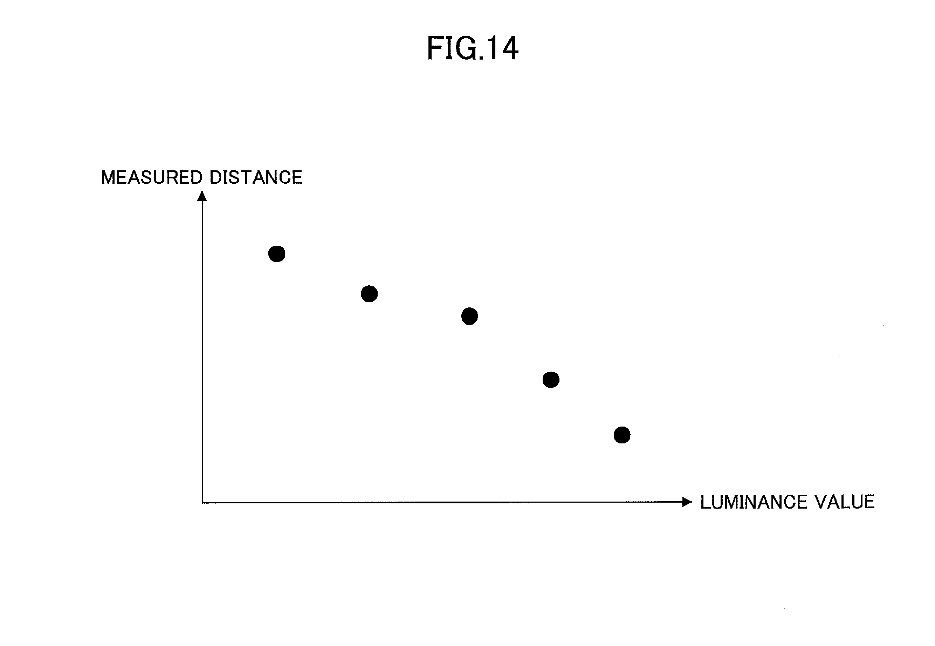

In the following, detail of the function of the analysis information generating unit 1004 will be described. Fig. 14 is an illustration diagram for illustrating a method for generating the analysis information performed by the analysis information generating unit 1004.

The analysis information generating unit 1004 analyzes the object to be irradiated based on the luminance value corresponding to the light receiving amount of the laser beam calculated by the light receiving amount calculating unit 1003. Here, the analysis information generating unit 1004 can analyze the object to be irradiated by having found an association between the luminance value corresponding to the light receiving amount of the laser beam and the object to be irradiated through an experiment or the like in advance.

Fig. 14 shows the association between the luminance values corresponding to the light receiving amount of the laser beam calculated by the light receiving amount calculating unit 1003 and measured distances when the laser beam emitted from the laser lighting unit 120 irradiates the road surface. As shown in Fig. 14, when the measured distance becomes longer, the calculated luminance value becomes smaller. Meanwhile, when the measured distance becomes shorter, the calculated luminance value becomes greater.

Therefore, when storing a table indicating the association shown in Fig. 14 in the ROM 304, the distance to the object to be irradiated can be calculated every time the luminance value corresponding to the light receiving amount of the laser beam is calculated by referring to the table indicating the association shown in Fig. 14.

Additionally, although the table is used in the above description, this is not a limited example. For example, in the calculation of the distance to the object to be irradiated, the distance to the object to be irradiated may be calculated by having approximated the association shown in Fig. 14 as a function and substituting the calculated luminance value into the function.

Also, the analysis information generated by the analysis information generating unit 1004 is not limited to the distance to the object to be irradiated. For example, by monitoring variance of the luminance values corresponding to the light receiving amount of the laser beam, information indicating presence of change in the object to be irradiated, or whether the object to be irradiated is approaching or separating can be found.

Specifically, when the luminance values corresponding to the light receiving amount of the laser beam is rapidly increased between the frames, it can be estimated that another object may be inserted in the light path between the laser lighting unit 120 and the road surface (the object to be irradiated is changed). For example, when the distance to the preceding vehicle becomes shorter and a part of the preceding vehicle is inserted in the light path between the laser lighting unit 120 and the road surface, the luminance values corresponding to the light receiving amount of the laser beam are rapidly increased since the laser beam is reflected at the preceding vehicle.

Also, when the luminance values corresponding to the light receiving amount of the laser beam are gradually increased or gradually decreased, it can be estimated that the object placed in the light path between the laser lighting unit 120 and the road surface (the object to be irradiated) is gradually approaching or gradually separating. For example, when the distance to the preceding vehicle, whose part has been inserted in the light path between the laser lighting unit 120 and the road surface, further becomes shorter, the luminance values corresponding to the light receiving amount of the laser beam are gradually increased. Meanwhile, when the distance to the preceding vehicle whose part has been inserted in the light path between the laser lighting unit 120 and the road surface becomes longer, the luminance values corresponding to the light receiving amount of the laser beam are gradually decreased.

As described above, by monitoring the luminance values corresponding to the light receiving amount of the laser beam, the information indicating presence of change in the object to be irradiated, or whether the object to be irradiated is approaching or separating can be found.

### <10. Summary>

As described above, in the measuring system of the present embodiment:
the laser beam emitted from the laser lighting unit is received by the capturing unit;
the luminance values corresponding to the light receiving amount of the laser beam received by the capturing unit is calculated, thereby determining a state of the object to be irradiated based on the calculated luminance values;
in the calculation of the luminance values corresponding to the light receiving amount of the laser beam, the differential values between the luminance values of the captured image generated in a frame in which the laser beam has not been emitted within the exposure period and the luminance values of the captured image generated in a frame in which the laser beam has been emitted within the exposure period are calculated;
timing at which the laser beam is emitted is determined according to the exposure start timing of the capturing unit so that the emission of the laser beam and the receipt of the laser beam reflected at the object to be irradiated are included in the same exposure period in the capturing unit;
a plurality of pulses are formed in the laser beam emitted within the exposure period so as to secure enough value of the luminance value in the capturing unit when the laser beam emitted from the laser lighting unit and reflected at the object to be irradiated is received by the capturing unit;
a frame in which the laser beam is not emitted within the exposure period is transmitted as well as a frame in which the laser beam is emitted within the exposure period so as to calculate the differential values of the luminance values in the captured images.

Thus, in the measuring system combining the ranging technologies respectively having different measuring theory, the laser beam emitted from the laser lighting unit and reflected at the object to be irradiated can be received by the capturing unit. As a consequence, the dedicated photodetector for receiving the laser beam reflected at the object to be irradiated is not required and the number of components can be reduced.

Additionally, the present embodiment can be also described as follows.

A measuring method of measuring system 100 which includes a capturing unit 111 configured to capture images of a certain area, thereby generating a moving picture, and a lighting unit 120 configured to emit light in a form of pulses, the measuring method comprising the step of: receiving the light by the capturing unit 111, wherein the light is emitted by the lighting unit 120 in synchronization with an exposure period of the capturing unit and is reflected at the certain area, thereby being received by the capturing unit within the exposure period.

The measuring method as described above, further comprising the steps of: detecting exposure start timing of the capturing unit 111 (401); and instructing the lighting unit 120 to emit the light based on the detected exposure start timing (403).

The measuring method as described above, wherein the step of instructing is performed at every detection of the exposure start timing.

The measuring method as described above, wherein the step of instructing is performed at one time of detection of the exposure start timing among a plurality of the times of detection of the exposure start timing.

The measuring method as described above, wherein the lighting unit emits a predetermined number of pulses of the light 602, 702 or 802 upon every instruction to emit the light given in the step of instructing.

The measuring method as described above, further comprising the step of calculating a luminance value corresponding to a light amount of the light in the form of pulses received by the capturing unit 111.

The measuring method as described above, wherein in the step of calculating, the luminance value corresponding to the received light amount of the light in the form of pulses is calculated based on a difference between an image 1102 captured by the capturing unit 111 when an instruction to emit light is given in the step of instructing and an image 1101 captured by the capturing unit 111 when an instruction to emit light is not given in the step of instructing.

The measuring method as described above, further comprising the step of computing parallax between a plurality of the images, wherein the images are respectively captured by the plurality of capturing units.

An information processing apparatus 130 comprising: a capturing unit 111 configured to capture images of a certain area, thereby generating a moving picture; a lighting unit 120 configured to emit light in a form of pulses; and a calculating unit 1003 configured to calculate a luminance value corresponding to a light amount of the light in the form of pulses received by the capturing unit, wherein the light is emitted by the lighting unit in synchronization with an exposure period of the capturing unit and is reflected at the certain area, thereby being received by the capturing unit within the exposure period.

A computer-readable program 132 causing a computer of an information processing apparatus, which includes a capturing unit configured to capture images of a certain area, thereby generating a moving picture, and a lighting unit configured to emit light in a form of pulses, to perform the step of calculating a luminance value corresponding to a light amount of the light in a form of pulses received by the capturing unit; wherein the light is emitted by the lighting unit in synchronization with an exposure period of the capturing unit and is reflected at the certain area, thereby being received by the capturing unit within the exposure period.

### [Second Embodiment]

Although in the first embodiment described above, the stereo capturing unit 110 and the laser lighting unit 120 are disposed representing the ranging technologies having different measuring theories, this is not a limiting example. For example, a LED lighting unit may be further disposed and LED light emitted from the LED lighting unit may be also received by the stereo capturing unit 110.

### <1. Overall Configuration of Measuring System>

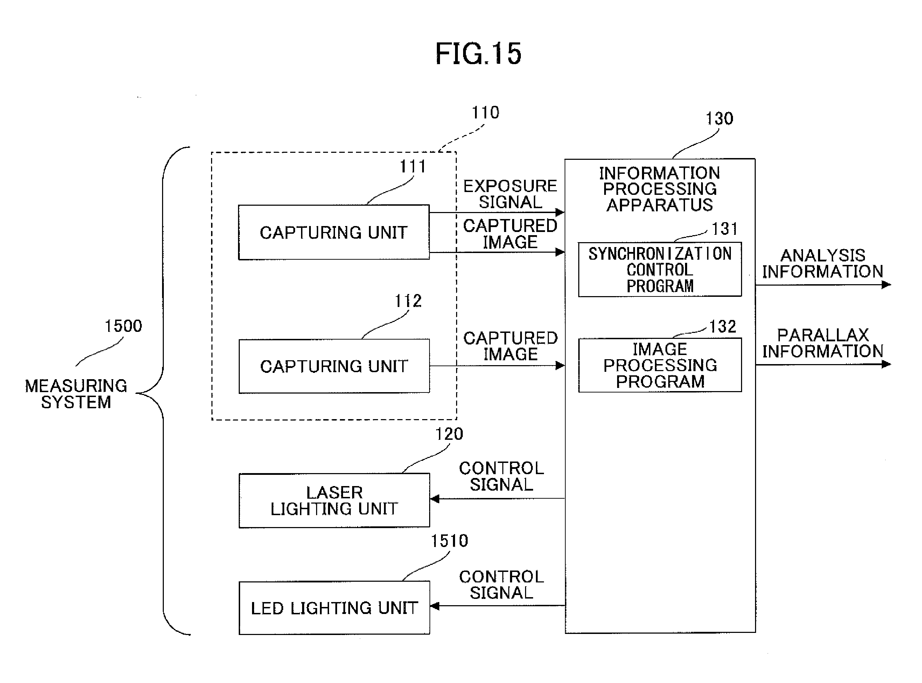

Fig. 15 is an illustration diagram for illustrating the overall configuration of the measuring system 1500 of the second embodiment. As shown in Fig. 15, the measuring system 1500 includes the measuring system 100 shown in Fig. 1 and a LED lighting unit 1510. Additionally, identical reference numerals are applied to the same units or the like as those in the measuring system 100 shown in Fig. 1, and descriptions thereof are omitted.

The LED lighting unit 1510 irradiates the object to be irradiated by emitting LED light in a form of pulses. Timing at which the LED light is emitted is controlled by the information processing apparatus 130. The LED lighting unit 1510 emits the LED light based on the control signal sent from the information processing apparatus 130. Additionally, the LED light emitted from the LED lighting unit 1510 and reflected at the object to be irradiated is received by one or both of the capturing unit 111 and the capturing unit 112, thereby being sent to the information processing apparatus 130 as the captured image.

Thus, the LED light emitted from the laser lighting unit 1510 and reflected at the object to be irradiated can be received not by the dedicated photodetector but by the capturing unit 111 or capturing unit 112. Therefore, the number of components of the measuring system can be reduced.

Additionally, the windshield of the vehicle 200 is irradiated with the LED light emitted from the LED lighting unit 1510. Usually, the LED light irradiating the windshield is totally reflected at the windshield. Meanwhile, when raindrops adhere to outside of the windshield, the LED light transmits through the windshield. Therefore, by analyzing the light receiving amount of the LED light reflected at the windshield and received by the capturing unit 111 by the analyzing unit 903, deposition amount of raindrops can be found.

### <2. Details of Functions of Analysis Information Generating Unit>

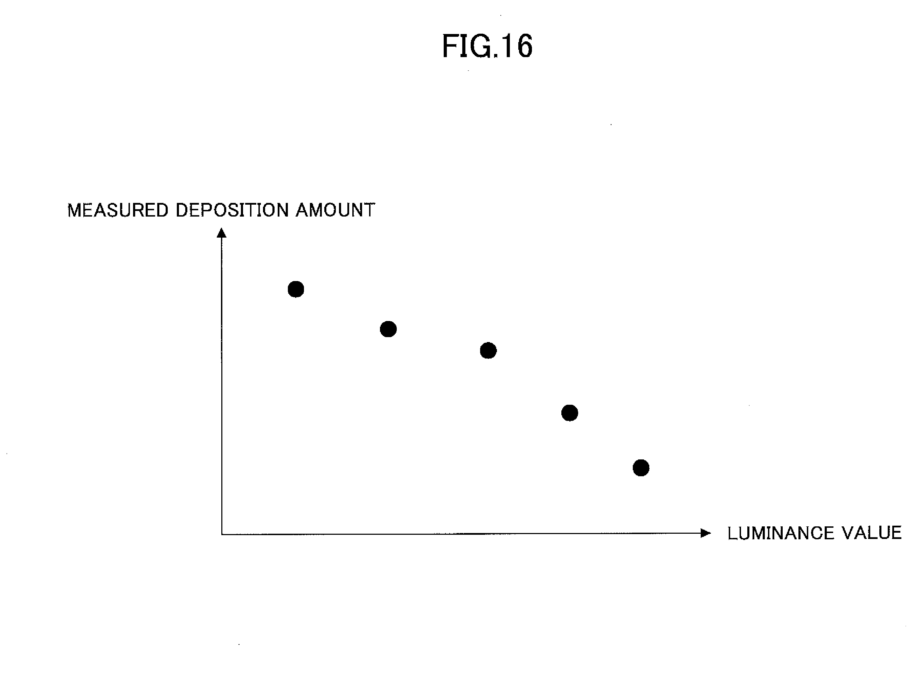

In the following, details of the functions of the analysis information generating unit 1004 will be described. Fig. 16 is an illustration diagram for illustrating a method for generating the analysis information performed by the analysis information generating unit 1004.

The analysis information generating unit 1004 can analyze state of the object to be irradiated by having found an association between the luminance value corresponding to the light receiving amount of the LED light calculated by the light receiving amount calculating unit 1003 and the state of the object to be irradiated through an experiment or the like in advance.

Fig. 16 shows the association between the luminance value calculated by the light receiving amount calculating unit 1003 and the measured deposition amount of raindrops in a case where the LED light emitted from the LED lighting unit 1510 irradiates the windshield. As shown in Fig. 16, when the measured deposition amount of raindrops becomes greater, the calculated luminance value becomes smaller. Meanwhile, when the measured deposition amount of raindrops becomes smaller, the calculated luminance value becomes greater.

Therefore, when storing a table indicating the association shown in Fig. 16 in the ROM 304, the deposition amount of raindrops can be calculated by referring to the table with respect to every calculated luminance value.

Additionally, similarly to the first embodiment, having approximated the association shown in Fig. 16 as a function in advance, the function may be stored in the ROM 304 instead of the table.

Although, in the present embodiment, the measuring system 1500 is configured to include the LED lighting unit 1510 and the laser lighting unit 120, the LED lighting unit 1510 may be disposed instead of the laser lighting unit 120 in the measuring system 1500.

Additionally, the present embodiment can be also described as follows.

A measuring method of measuring system 100 which includes a capturing unit 111 configured to capture images of a certain area, thereby generating a moving picture, and a lighting unit 120 configured to emit light in a form of pulses, the measuring method comprising the step of: receiving the light by the capturing unit, wherein the light is emitted by the lighting unit in synchronization with an exposure period of the capturing unit and is reflected at the certain area, thereby being received by the capturing unit within the exposure period.

The measuring method as described above, further comprising the step of determining, based on the calculated luminance value, at least one of a presence of change in an object reflecting the light in the certain area, a distance to the object, and an amount of water drops deposited on a glass surface in the vicinity of the lighting unit.

An information processing apparatus 130 comprising: a capturing unit 111 configured to capture images of a certain area, thereby generating a moving picture; a lighting unit 120 configured to emit light in a form of pulses; and a calculating unit 1003 configured to calculate a luminance value corresponding to a light amount of the light in the form of pulses received by the capturing unit, wherein the light is emitted by the lighting unit in synchronization with an exposure period of the capturing unit and is reflected at the certain area, thereby being received by the capturing unit within the exposure period.

A computer-readable program 132 causing a computer of an information processing apparatus, which includes a capturing unit configured to capture images of a certain area, thereby generating a moving picture, and a lighting unit configured to emit light in a form of pulses, to perform the step of calculating a luminance value corresponding to a light amount of the light in a form of pulses received by the capturing unit; wherein the light is emitted by the lighting unit in synchronization with an exposure period of the capturing unit and is reflected at the certain area, thereby being received by the capturing unit within the exposure period.

### [Third Embodiment]

Although in the first and the second embodiments, the reflected light is received so that the pixel corresponding to positions at which the light is received is placed in the center of the captured image, this is not a limiting example. The reflected light may be received so that pixel corresponding to positions at which the light is received is placed in an end of the image.

Specifically, the light reflected at the object to be irradiated may pass through a certain optical system before being received by the capturing unit and may be refracted at the optical system, thereby being received in a certain light receiving position of the capturing unit 111.

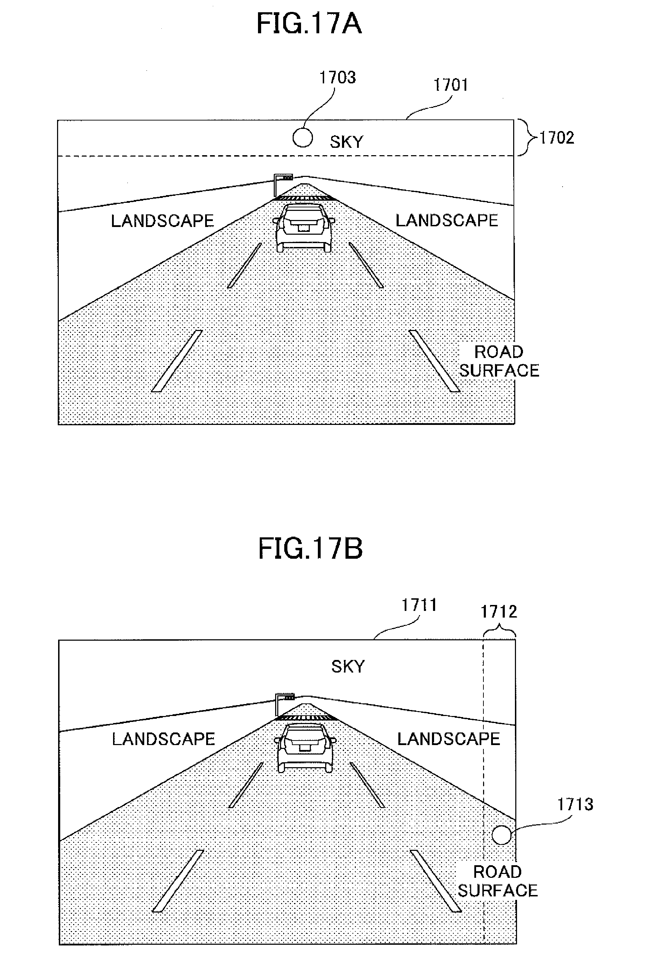

Fig. 17A and Fig. 17B are illustration diagrams for showing examples of captured images 1701 and 1711. Fig. 17A shows an example image in a case where the optical system is adjusted so that a pixel 1703 corresponding to the position at which the light is received is located in an upper end area 1702 of the captured image 1701.

As shown in Fig. 17A, by adjusting the optical system so that the pixel 1703 corresponding to the position at which the light is received is located in upper end area 1702 of the captured image 1701, the position at which the light is received can be located in an area corresponding to the "sky" in the captured image. Generally, in the area corresponding to the "sky" in the captured image, high precision in calculating the parallax by the parallax information generating unit 904 is not required. Therefore, by receiving the light at the position as described above, the influence of the light from a lighting unit (one or both of the laser lighting unit and the LED lighting unit) on the parallax calculation can be minimized.

Fig. 17B is an example image in a case where the optical system is adjusted so that a pixel 1713 corresponding to the position at which the light is received is located in a right end area 1712 of a captured image 1711.

As shown in Fig. 17B, by adjusting the optical system so that the pixel 1713 corresponding to the position at which the light is received is located in the right end area 1712 of the captured image 1711, the position at which the light is received can be located in an area which is not used for the parallax calculation. Generally, since a matching pixel is shifted by certain pixels in the horizontal direction, when shifting right, for example, the right end area 1712 is not used for the parallax calculation. As described above, by adjusting the optical system so that the pixel 1713 corresponding to the position at which the light is received is located in the right end area 1712 determined according to a shift amount, the influence of the light from a lighting unit on the parallax calculation can be minimized.

Additionally, the present embodiment can be also described as follows.

A measuring method of measuring system 100 which includes a capturing unit 111 configured to capture images of a certain area, thereby generating a moving picture, and a lighting unit 120 configured to emit light in a form of pulses, the measuring method comprising the step of: receiving the light by the capturing unit, wherein the light is emitted by the lighting unit in synchronization with an exposure period of the capturing unit and is reflected at the certain area, thereby being received by the capturing unit within the exposure period.

The measuring method as described above, further comprising the step of computing parallax between a plurality of the images, wherein the images are respectively captured by the plurality of capturing units.

The measuring method as described above, wherein in the step of receiving, the light is received in an end area of the capturing unit 111.

An information processing apparatus 130 comprising: a capturing unit 111 configured to capture images of a certain area, thereby generating a moving picture; a lighting unit 120 configured to emit light in a form of pulses; and a calculating unit 1003 configured to calculate a luminance value corresponding to a light amount of the light in the form of pulses received by the capturing unit, wherein the light is emitted by the lighting unit in synchronization with an exposure period of the capturing unit and is reflected at the certain area, thereby being received by the capturing unit within the exposure period.

A computer-readable program 132 causing a computer of an information processing apparatus, which includes a capturing unit configured to capture images of a certain area, thereby generating a moving picture, and a lighting unit configured to emit light in a form of pulses, to perform the step of calculating a luminance value corresponding to a light amount of the light in a form of pulses received by the capturing unit; wherein the light is emitted by the lighting unit in synchronization with an exposure period of the capturing unit and is reflected at the certain area, thereby being received by the capturing unit within the exposure period.

### [Fourth Embodiment]

Although in the first embodiment to the third embodiment, the stereo capturing unit 110 and the lighting unit (one or both of the laser lighting unit and the LED lighting unit) are disposed representing a combination of the ranging technologies having different measuring theories, this is not a limited example. For example, the measuring system may be configured by combining a monocular capturing unit and the lighting unit.

### <1. Overall Configuration of Measuring System>

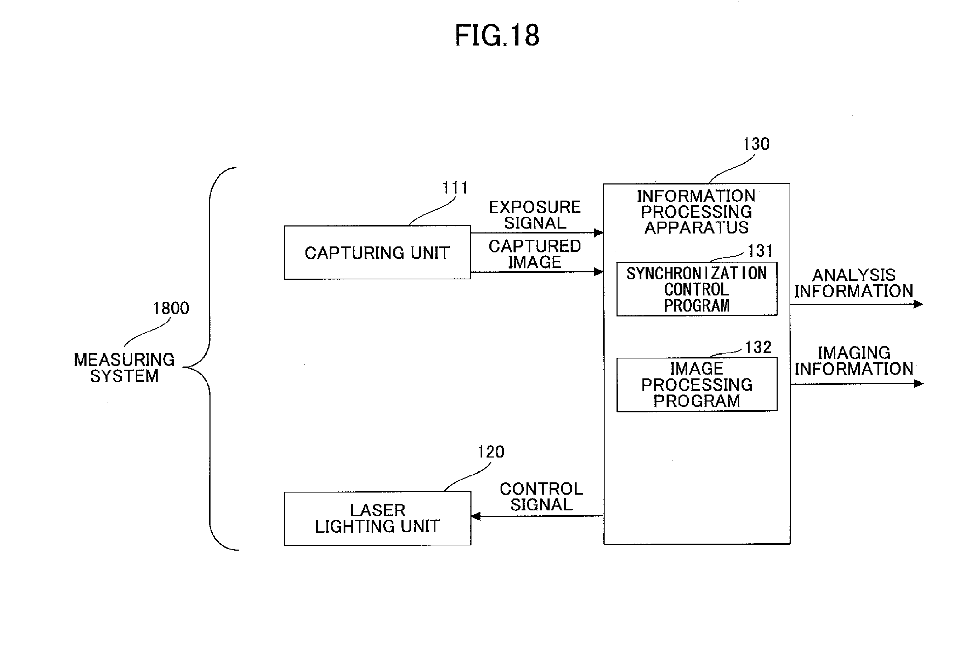

Fig. 18 is an illustration diagram for illustrating an overall configuration of the measuring system of the fourth embodiment. As shown in Fig. 18, a measuring system 1800 includes the monocular capturing unit 111, the laser lighting unit 120 and the information processing apparatus 130. Additionally, the configurations of the units included in the measuring system 1800 are already described in the first embodiment. Therefore, in the following, difference from the first embodiment will be mainly described and description of the units will be omitted.

### <2. Function of Information Processing Apparatus (Image Processing Program)>

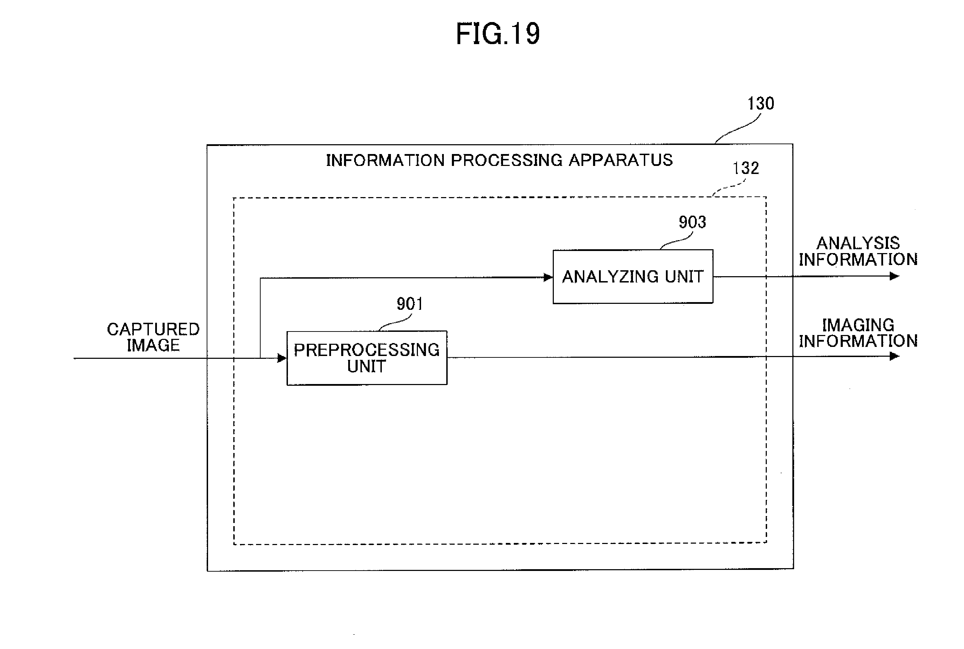

Functions achieved by executing the image processing program 132 in the information processing apparatus 130 are described. Fig. 19 is an illustration diagram for illustrating the functions achieved by executing the image processing program 132 in the information processing apparatus 130.

In the measuring system 1800 of the present embodiment, the parallax calculation is not performed since the monocular capturing unit 111 is used instead of the stereo capturing unit 110. The captured image sent by the capturing unit 111 is output as imaging information after performing the preprocess by the preprocessing unit 901.

The function of the analyzing unit 903 in the present embodiment for receiving the captured image and calculating the luminance value corresponding to the light receiving amount of the laser beam to output the analysis information is similar to that in the first embodiment.

Additionally, the present embodiment can be also described as follows.

A measuring method of measuring system 100 which includes a capturing unit 111 configured to capture images of a certain area, thereby generating a moving picture, and a lighting unit 120 configured to emit light in a form of pulses, the measuring method comprising the step of: receiving the light by the capturing unit, wherein the light is emitted by the lighting unit in synchronization with an exposure period of the capturing unit and is reflected at the certain area, thereby being received by the capturing unit within the exposure period.

An information processing apparatus 130 comprising: a capturing unit 111 configured to capture images of a certain area, thereby generating a moving picture; a lighting unit 120 configured to emit light in a form of pulses; and a calculating unit 1003 configured to calculate a luminance value corresponding to a light amount of the light in the form of pulses received by the capturing unit, wherein the light is emitted by the lighting unit in synchronization with an exposure period of the capturing unit and is reflected at the certain area, thereby being received by the capturing unit within the exposure period.

A computer-readable program 132 causing a computer of an information processing apparatus, which includes a capturing unit configured to capture images of a certain area, thereby generating a moving picture, and a lighting unit configured to emit light in a form of pulses, to perform the step of calculating a luminance value corresponding to a light amount of the light in a form of pulses received by the capturing unit; wherein the light is emitted by the lighting unit in synchronization with an exposure period of the capturing unit and is reflected at the certain area, thereby being received by the capturing unit within the exposure period.

### [Fifth Embodiment]

Although, in the respective embodiments described above, the laser beam in a form of the pulses is emitted within the exposure period to irradiate the same object, this is not a limiting example. For example, an irradiating direction may be changed after irradiating the object with the laser beam in the form of pulses, and another object may be further irradiated with the laser beam in the form of pulses within the same exposure period. Additionally, the emitting direction of the laser beam may be changed in horizontal direction or in vertical direction.

Although, in the respective embodiments described above, dynamic range for generating the captured image is not described, the dynamic range may be set according to the reflected light which has been emitted from the lighting unit and reflected, thereby generating the captured image.

Additionally, the present embodiment can be also described as follows.

A measuring method of measuring system 100 which includes a capturing unit 111 configured to capture images of a certain area, thereby generating a moving picture, and a lighting unit 120 configured to emit light in a form of pulses, the measuring method comprising the step of: receiving the light by the capturing unit, wherein the light is emitted by the lighting unit in synchronization with an exposure period of the capturing unit and is reflected at the certain area, thereby being received by the capturing unit within the exposure period.

An information processing apparatus 130 comprising: a capturing unit 111 configured to capture images of a certain area, thereby generating a moving picture; a lighting unit 120 configured to emit light in a form of pulses; and a calculating unit 1003 configured to calculate a luminance value corresponding to a light amount of the light in the form of pulses received by the capturing unit, wherein the light is emitted by the lighting unit in synchronization with an exposure period of the capturing unit and is reflected at the certain area, thereby being received by the capturing unit within the exposure period.

A computer-readable program 132 causing a computer of an information processing apparatus, which includes a capturing unit configured to capture images of a certain area, thereby generating a moving picture, and a lighting unit configured to emit light in a form of pulses, to perform the step of calculating a luminance value corresponding to a light amount of the light in a form of pulses received by the capturing unit; wherein the light is emitted by the lighting unit in synchronization with an exposure period of the capturing unit and is reflected at the certain area, thereby being received by the capturing unit within the exposure period.

Herein above, although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A measuring method of measuring system which includes a capturing unit configured to capture images of a certain area, thereby generating a moving picture, and a lighting unit configured to emit light in a form of pulses, the measuring method comprising the step of: receiving the light by the capturing unit, wherein the light is emitted by the lighting unit in synchronization with an exposure period of the capturing unit and is reflected at the certain area, thereby being received by the capturing unit within the exposure period.

2. The measuring method as claimed in claim 1, further comprising the steps of:
detecting exposure start timing of the capturing unit; and
instructing the lighting unit to emit the light based on the detected exposure start timing.

3. The measuring method as claimed in claim 2, wherein the step of instructing is performed at every detection of the exposure start timing.

4. The measuring method as claimed in claim 2, wherein the step of instructing is performed at one time of detection of the exposure start timing among a plurality of the times of detection of the exposure start timing.

5. The measuring method as claimed in any one of claim 2 to claim 4, wherein the lighting unit emits a predetermined number of pulses of the light upon every instruction to emit the light given in the step of instructing.

6. The measuring method as claimed in any one of claim 2 to claim 5, further comprising the step of calculating a luminance value corresponding to a light amount of the light in the form of pulses received by the capturing unit.

7. The measuring method as claimed in claim 6, further comprising the step of determining, based on the calculated luminance value, at least one of a presence of change in an object reflecting the light in the certain area, a distance to the object, and an amount of water drops deposited on a glass surface in the vicinity of the lighting unit.

8. The measuring method as claimed in claim 6 or claim 7, wherein in the step of calculating, the luminance value corresponding to the received light amount of the light in the form of pulses is calculated based on a difference between an image captured by the capturing unit when an instruction to emit light is given in the step of instructing and an image captured by the capturing unit when an instruction to emit light is not given in the step of instructing.

9. The measuring method as claimed in any one of claim 1 to claim 8, further comprising the step of computing parallax between a plurality of the images, wherein the images are respectively captured by the plurality of capturing units.

10. The measuring method as claimed in claim 9, wherein in the step of receiving, the light is received in an end area of the capturing unit.

11. An information processing apparatus comprising:
a capturing unit configured to capture images of a certain area, thereby generating a moving picture;
a lighting unit configured to emit light in a form of pulses; and
a calculating unit configured to calculate a luminance value corresponding to a light amount of the light in the form of pulses received by the capturing unit, wherein the light is emitted by the lighting unit in synchronization with an exposure period of the capturing unit and is reflected at the certain area, thereby being received by the capturing unit within the exposure period.

12. A computer-readable program causing a computer of an information processing apparatus, which includes a capturing unit configured to capture images of a certain area, thereby generating a moving picture, and a lighting unit configured to emit light in a form of pulses, to perform the step of
calculating a luminance value corresponding to a light amount of the light in a form of pulses received by the capturing unit; wherein the light is emitted by the lighting unit in synchronization with an exposure period of the capturing unit and is reflected at the certain area, thereby being received by the capturing unit within the exposure period.
